# EUROPÄISCHE PATENTSCHRIFT

(11) **EP 0 458 359 B1**
(45) Veröffentlichungstag und Bekanntmachung des Hinweises auf die Patenterteilung: **16.03.1994**
(21) Anmeldenummer: 91108464.8
(22) Anmeldetag: 24.05.1991
(51) Int. Cl.: A01M 17/00, A01F 25/16

(54) **Verfahren und Einrichtung zum Entwesen von organischem Gut**
Process and apparatus for eradicating pests in organic bulk goods
Procédé et installation pour exterminer les vermines de matériaux en vrac

(30) Priorität: 25.05.1990 DE 4016900
(43) Veröffentlichungstag der Anmeldung: 27.11.1991
(73) Patentinhaber: KOHLENSÄURE-WERKE RUD. BUSE GMBH & CO., D-53557 Bad Hönningen (DE); MARTIN BAUER GMBH & CO. KG., D-91487 Vestenbergsgreuth (DE)
(72) Erfinder: Finkenzeller, Erwin, Dipl.-Ing. (FH), W-8521 Grossenseebach (DE)
(74) Vertreter: Liesegang, Roland, Dr.-Ing.

(56) Entgegenhaltungen:
- EP-A- 0 320 012
- DE-A- 2 602 034
- DE-A- 3 445 990
- DE-A- 3 930 470

## Beschreibung

Die Erfindung betrifft ein Verfahren und eine Einrichtung zum Entwesen von organischem Gut, beispielsweise Getreide, Früchte, Drogen und dergleichen, gemäß dem Oberbegriff des Patentanspruchs 1. Ferner betrifft die Erfindung eine Einrichtung zur Durchführung eines solchen Verfahrens.

Ein Verfahren mit den Merkmalen des Oberbegriffs des Anspruchs 1 ist aus der DE-A-34 45 990 bekannt. Danach soll ein kontinuierliches oder diskontinuierliches Behandeln organischen Gutes fakultativ in zwei parallel geschalteten Behältern ermöglicht werden, welche durch Umschalten ein wechselweises Nachfüllen und Entnehmen des Gutes gestatten Dabei läßt sich das Gas nach der Behandlung und Entspannung durch erneutes Verdichten wiederverwenden.

Das Entwesen organischen Guts erfolgte in der Vergangenheit mittels toxischer Gase, die zwar sehr wirkungsvoll sind, von deren Verwendung man aber aus Gründen des Umweltschutzes abgehen will und soll. Nachdem man in Laborversuchen festgestellt hatte, daß auch mit neutralen Gasen, insbesondere Kohlendioxid eine Entwesung möglich ist, wird in neuester Zeit auch in der Praxis Kohlendioxid zur Entwesung eingesetzt, wobei die erforderliche Einwirkzeit dadurch auf vertretbare Zeitspannen herabgesetzt wird, daß man die Entwesung in einem druckfesten Behälter vornimmt und das Kohlendioxidgas unter einen vergleichseise hohen Druck setzt. Freilich sind dabei vergleichsweise große Mengen an Kohlendioxidgas erforderlich, so daß die Kosten höher liegen als bei den früheren Verfahren mit toxischen Gasen. Zur Verbesserung der Wirtschaftlichkeit ist nun in dem nicht vorveröffentlichten deutschen Patent DE-C-3930470 (deutsche Patentanmeldung P 39 30 470.1) ein Verfahren offenbart, bei dem das in dem druckfesten Behälter unter hohem Druck stehende Gas nach abgelaufener Entwesungszeit in einem zweiten druckfesten, ebenfalls mit zu entwesendem Gut gefüllten Behälter entspannt wird. Nach erfolgtem Druckausgleich zwischen den beiden Behältern wird dann das im ersten Behälter befindliche, immer noch einen wesentlichen Überdruck aufweisende Gas in die Atmosphäre entlassen. Damit wird zwar die Wirtschaftlichkeit bereits wesentlich verbessert, bei gleicher Grösse von erstem und zweitem Behälter stehen etwa 50 % des Kohlendioxids zur erneuten Verwendung zur Verfügung, jedoch werden immer noch beträchtliche Kohlendioxidmengen nach einmaliger Verwendung in die Atmosphäre abgegeben, was im übrigen nicht nur aus Wirtschaftlichkeitserwägungen sondern auch aus Gründen des Umweltschutzes - wenn auch nicht vergleichbar mit toxischen Gasen - keine optimale Lösung darstellt.

Aufgabe der vorliegenden Erfindung ist es deshalb, ein Verfahren und eine Einrichtung zur Durchführung des Verfahrens zu schaffen, mit deren Hilfe es gelingt, die Wirtschaftlichkeit und die Umwelt-Verträglichkeit noch weiter zu verbessern. Die Lösung dieser Aufgabe ergibt sich verfahrensmässig aus den kennzeichnenden Merkmalen des Patentanspruchs 1, einrichtungsmässig aus den kennzeichnenden Merkmalen des Patentanspruchs 2.

Gemäss der Erfindung wird also das im ersten Behälter nach dem Druckausgleich mit dem zweiten Behälter verbliebene Gas, das immer noch einen wesentlichen Überdruck aufweist, nicht in die Atmosphäre entlassen, sondern einem Verdichter zugeführt, in welchem es wieder auf den Betriebsdruck (Gasdruck im Behälter während der Entwesungszeit) verdichtet wird. Wesentlich dabei ist, daß das Gas bei diesem Verdichtungsvorgang im gasförmigen Zustand verbleibt, also nicht wie bei anderen Kohlendioxid-Rückgewinnungsprozesse - meist üblich - verflüssigt wird. Würde man das Gas verflüssigen, dann wäre für die erneute Vergasung ein so hoher Energieaufwand erforderlich, daß die Wirtschaftlichkeit der Rückgewinnung in Frage gestellt wäre.

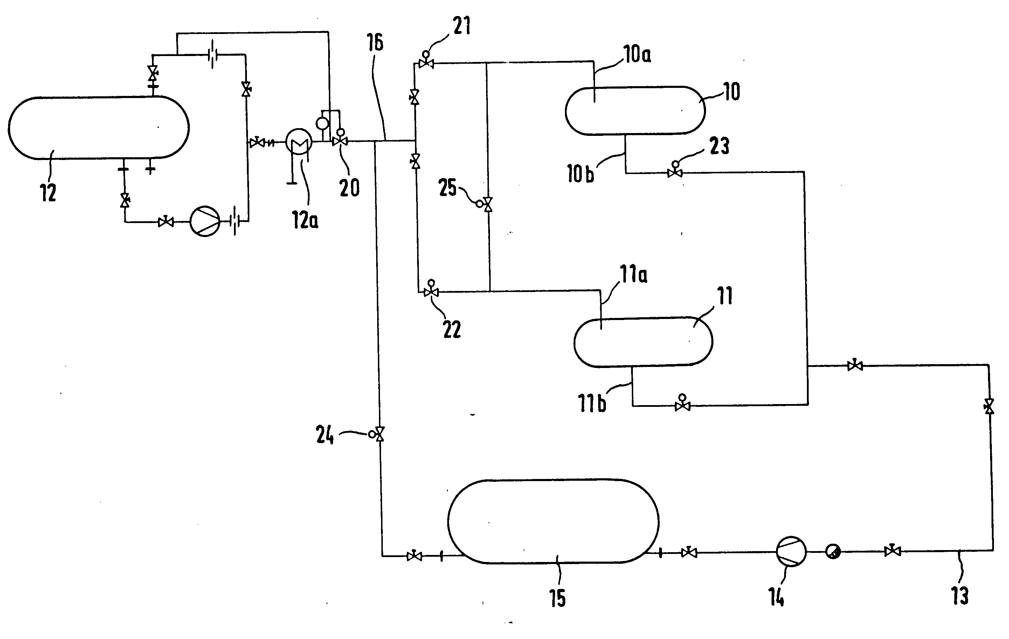

Die Erfindung wird nachfolgend anhand der Zeichnung noch näher erläutert. Die einzige Figur zeigt ein Schema einer erfindungsgemäßen Einrichtung.

Mit 10 ist ein erster druckfester Behälter mit Gaseinlaß 10a und Gasauslaß 10b bezeichnet. Ein weiterer druckfester Behälter 11 weist einen Gaseinlaß 11a und einen Gasauslaß 11b auf. Die Einlässe 10a und 11a der beiden Behälter 10,11 sind an den Auslaß einer Kohlendioxidquelle, nämlich einem Flüssiggas-Lagertank, mit Verdampfer 12a angeschlossen. Die beiden Gasauslässe 10b und 11b der Behälter 10,11 führen über eine gemeinsame Rückführungsleitung 13 zu einem Verdichter 14, der den Einlaß eines Vorlagebehälters 15 speist, dessen Auslaß mit der gemeinsamen Versorgungsleitung 16 für die beiden Behälter 10,11 in Verbindung steht. Die in die einzelnen Leitungen eingeschalteten Sperrventile werden nachfolgend bei der Funktionsbeschreibung erläutert.

Vor Beginn des Prozesses seien alle auf der Zeichnung dargestellten Sperrventile geschlossen. Zur Durchführung der Entwesung wird dann zunächst in den ersten Behälter 10 das zu entwesende Gut, beispielsweise Kräuter, eingebracht. Daraufhin werden die Ventile der üblichen und deshalb hier nicht näher erläuterten Verdampfereinrichung des Lagertanks 12 sowie die Ventile 20 und 21 geöffnet. Damit strömt Kohlendioxidgas in den Behälter 10, und zwar so lange, bis im Behälter 10 der gewünschte Entwesungsdruck erreicht ist, beispielsweise 20 bar. Daraufhin werden die Ventile 20, 21 wieder geschlossen und die im Behälter 10 befindlichen Kräuter für eine vorgegebene Zeitspanne, beispielsweise einigen Stunden, der Entwesungswirkung des unter Druck stehenden Kohlendioyids ausgesetzt. Nach Ablauf der Entwesungszeit wird das Ventil 25 geöffnet, mit der Folge, daß zwischen den Behältern 10 und 11 in vergleichsweise kurzer Zeit ein Druckausgleich erfolgt, d.h., aus dem Behälter 10 strömt soviel Kohlendioxidgas in den Behälter 11, bis in beiden Behältern, gleiche Grösse vorausgesetzt, ein Druck von 10 bar herrscht. Daraufhin wird das Ventil 25 geschlossen und die Ventile 20 und 22 geöffnet, so daß frisches Kohlendioxidgas aus dem Lagertank 12 in den selbstverständlich vorher mit zu entwesendem Gut gefüllten Behälter 11 strömt, und zwar so lange, bis der gewünschte Druck von 20 bar erreicht ist. Die Ventile 20 und 22 werden dann wieder geschlossen. Zugleich mit dem erläuterten Auffüllen des Behälters 11 auf den Entwesungsdruck von 20 bar wird aber auch das Ventil 23 geöffnet, mit der Folge, daß das im Behälter 10 ja noch einen Druck von 10 bar aufweisende Kohlendioxidgas über die Auslaßleitung 13 in den Verdichter 14 strömt, wo es, unter Beibehaltung des gasförmigen Aggregatszustands, auf einen Druck von 40 bar verdichtet wird, wobei sich das verdichtete Gas in dem Vorhaltebehälter 15 ansammelt. Mittels in der Auslaßleitung 13 eingesetzter und auf der Zeichnung angedeuteter Drosseln wird der Behälter 10 vergleichsweise langsam entleert, so daß kein Verdichter 14 größerer Leistung erforderlich ist. Sobald sich der Behälter 10 auf Normaldruck entleert hat, wird das Ventil 23 wieder geschlossen, und der Behälter 10 kann wiederum mit zu entwesendem Gut gefüllt werden.

Nach Beendigung des Entwesungsvorgangs im zweiten Behälter 11 wird das Ventil 25 geöffnet, womit wiederum ein Druckausgleich zwischen den Behältern 11 und 10 erfolgt. Nach erreichtem Druckausgleich wird das Ventil 25 geschlossen und die Ventile 24 und 21 geöffnet, so daß das im Vorhaltetank 15 unter Druck stehende Kohlendioxidgas in den Behälter 10 einströmt und in diesen wieder auf den gewünschten Entwesungsdruck von 20 bar bringt. Während des nachfolgenden Entwesungsvorgangs im Behälter 10 wird dann wiederum der Behälter 11 über den Verdichter 14 in den Vorhaltebehälter 15 entleert usw. Selbstverständlich zeigt die obige Erläuterung nur das Grundprinzip auf. In der Praxis wird es erforderlich sein, bei jedem Entwesungsvorgang aus dem Lagertank 12 eine gewisse Menge an frischem Kohlendioxidgas "nachzuliefern", weil sich ja die Behälter 10, 11 nicht völlig entleeren und Gasverluste nicht zu vermeiden sind. Der erforderliche Nachschub an frischem Kohlendioxidgas kann jedoch im Vergleich zur Gesamtmenge an erforderlichem Kohlendioxidgas sehr gering gehalten werden, beispielsweise bei 5% der gesamten für einen der beiden Behälter erforderlichen Kohlendioxidgasmenge liegen. Das Gas wird im Verdichter 14 über den erforderlichen Entwesungsdruck verdichtet und im Vorhaltebehälter 15 bei diesem hohen Verdichtungsdruck gehalten, um dann bei der Überführung des Gases in den Entwesungsbehälter dort den gewünschten Druck zu erreichen. Dabei ist an dieser Stelle darauf hinzuweisen, daß für die oben erwähnte langsame Entleerung (kleiner Verdichter) des Behälters 10 bzw. 11 genügend Zeit zur Verfügung steht, weil ja das im Verdichter 14 verdichtete und im Behälter 15 zwischengelagerte Gas erst nach Ablauf der Entwesungszeit des jeweils anderen Behälters wieder benötigt wird.

Gegenüber dem beschriebenen Ausführungsbeispiel sind zahlreiche Abwandlungen möglich, ohne den Bereich der Erfindung zu verlassen. So kann beispielsweise auch mit drei oder mehr in entsprechender Weise geschalteten Entwesungsbehältern gearbeitet werden, gegebenenfalls unter Wegfall des Vorhaltebehälters 15. Auch ist es nicht zwingend erforderlich, daß die Entwesungsbehälter gleiches Fassungsvermögen besitzen. Schließlich ist das Erfindungsverfahren auch bei Vorhandensein nur eines einzigen Entwesungsbehälters anwendbar, wobei jedoch dann ein Vorlagebehälter obligatorisch ist. Hier dient also der Vorlagebehälter zunächst für die zum Entwesen erforderliche schnelle Entspannung (Druckausgleich zwischen beiden Behältern), worauf dann erst das Restgas des Entwesungsbehälters über den Verdichter in den Vorlagebehälter eingeleitet wird. Der Vorlagebehälter stellt also - bezüglich der schnellen Entspannung - zugleich den zweiten Entwesungsbehälter dar. Schließlich ist das Erfindungsverfahren auch dann mit Vorteil anzuwenden, wenn mit erwärmtem Kohlendioxid und/oder mit einem Kohlendioxid-Luft-Gemisch gearbeitet wird.

## Patentansprüche

1. Verfahren zum Entwesen von organischem Gut, wie Getreide, Früchte, Drogen und dergleichen, wechselweise in zwei druckfesten Entwesungsbehältern (10,11) mittels einem unter Druck stehenden Gas aus reinem oder mit Luft versetztem Kohlendioxid, bei dem das Gas nach der Behandlung in dem jeweiligen Entwesungsbehälter und darauffolgender Entspannung erneut verdichtet und einer Wiederverwendung zugeführt wird, dadurch **gekennzeichnet**, daß das Gas nach abgelaufener Entwesungszeit im ersten Entwesungsbehälter (10 oder 11) in den zweiten Entwesungsbehälter (11 oder 10) schnell entspannt wird, und daß nach dieser Entspannung im ersten Entwesungsbehälter (10 oder 11) verbliebenes, noch einen wesentlichen Überdruck aufweisendes Restgas zumindest teilweise einem Verdichter (14) zugeführt und dort unter Aufrechterhaltung des gasförmigen Aggregatzustandes auf einen Druck von zumindest Entwesungsdruck verdichtet wird und daß die genannten Vorgänge zeitlich derart abgestimmt werden, daß während der Entwesung in jeweils einem Entwesungsbehälter (10 oder 11) das Restgas aus dem anderen Behälter (11 oder 10) verdichtet und zwecks Zwischenlagerung einem Vorlagebehälter (15) zugeführt und von dort zur erneuten Verwendung rückgeführt wird.

2. Einrichtung zur Durchführung des Verfahrens nach Anspruch 1, mit einer Kohlendioxidquelle und zwei druck-festen Entwesungsbehältern, dadurch **gekennzeichnet**, daß die beiden Entwesungsbehälter über eine mittels Ventil (25) sperrbare Druckausgleichsleitung verbindbar sind und daß die wechselweise über Ventile (23) sperrbaren Ausgänge (10b, 11b) der beiden Entwesungsbehälter (10,11) über eine gemeinsame Ausgangsleitung (13) mit dem Eingang eines Verdichters (14) verbunden sind, dessen Ausgang über einen Vorlagebehälter (15) mit einer gemeinsamen Zuführleitung (16) für die Entwesungsbehälter (10,11) in einer mittels Ventil (24) sperrbaren Verbindung steht, wobei die gemeinsame Zuführleitung (16) in wechselweise mittels Ventilen (21,22) sperrbaren, zu den Entwesungsbehältern (10,11) führende Einzelleitungen (10a,10b) verzweigt ist.

## Claims

1. A method of eradicating pests from organic material such as cereals, fruit, drugs or the like, alternately in two pressure-tight pest-eradicating containers (10, 11), using a gas under pressure and consisting of carbon dioxide, either pure or mixed with air, the gas, after treatment in the respective pesteradicating container and subsequent expansion, being re-compressed and sent for re-use, characterised in that after the pest-eradication time in the first container (10 or 11) the gas is rapidly expanded into the second container (11 or 10) and, after the expansion, the gas remaining in the first container (10 or 11) and still at considerable excess pressure is at least partly fed to a compressor (14) where it is compressed to at least the pest-eradicating pressure while maintaining its gaseous aggregate state, and the aforementioned processes are so timed relative to one another that during pest eradication in either container (10 or 11) the residual gas from the other container (11 or 10) is compressed and temporarily stored in a collecting container (15) from which it is recycled for re-use.

2. A device for working the method according to claim 1, comprising a source of carbon dioxide and two pressure-tight pest-eradicating containers, characterised in that the two containers can be connected by a pressure-equalising line blockable by a valve (25) and the outlets (10b, 11b) of the two containers (10, 11), which are alternately blockable by valves (23), are connected by a common outlet line (13) to the inlet of a compressor (14), the output of which is connected via a collecting container (15) to a common supply line (16) for the pest-eradicating containers (10, 11), the connection being blockable by a valve (24), and the common supply line (16) branches into individual lines (10a, 10b) which are blockable by valves (21, 22) and lead to the pest-eradicating containers (10, 11).

## Revendications

1. Procédé pour la désinfestation de produits organiques, tels que des céréales, des fruits, des drogues ou similaires, alternativement dans deux récipients de désinfestation résistants à la pression (10, 11), au moyen d'un gaz sous pression constitué par de l'anhydride carbonique pur ou mélangé à de l'air, procédé dans lequel le gaz, après le traitement dans l'un des récipients de désinfestation et après la détente subséquente, est comprimé de nouveau et renvoyé pour être réutilisé, caractérisé en ce qu'après que le temps de désinfestation dans le premier récipient de désinfestation (10 ou 11) s'est écoulé, le gaz est détendu rapidement dans le second récipient de désinfestation (11 ou 10), en ce que le gaz résiduel qui reste dans le premier récipient de désinfestation (10 ou 11) après cette détente et qui présente encore une forte surpression est envoyé au moins en partie dans un compreseur (14), où il est comprimé, en étant maintenu à l'état gazeux, à une pression au moins égale à la pression de désinfestation, et en ce que lesdits processus sont synchronisés de telle sorte que, pendant la désinfestation dans l'un des récipients de désinfestation (10 ou 11), le gaz résiduel de l'autre récipient (11 ou 10) est comprimé, envoyé dans un réservoir collecteur (15) pour y être retenu temporairement et, de là, est recyclé pour être utilisé de nouveau.

2. Installation pour l'exécution du procédé selon la revendication 1, comprenant une source d'anhydride carbonique et deux récipients de désinfestation résistants à la pression, caractérisée en ce que les deux récipients de désinfestation peuvent être mis en communication par une conduite d'équilibrage de pression obturable au moyen d'une valve (25), et en ce que les sorties (10b, 11b) des deux récipients de désinfestation (10, 11), obturables alternativement au moyen de valves (23), sont reliées par une conduite de sortie commune (13) à l'entrée d'un compresseur (14), dont la sortie est en communication, blocable au moyen d'une valve et avec interposition d'un réservoir collecteur (15), avec une conduite d'alimentation commune (16) pour les récipients de désinfestation (10, 11), la conduite d'alimentation commune (16) se ramifiant en deux conduites individuelles (10a, 11a) qui peuvent être obturées alternativement au moyen de valves (21, 22) et qui débouchent dans les récipients de désinfestation (10, 11).
